# EUROPEAN PATENT APPLICATION

(11) **EP 4 473 819 A1**
(43) Date of publication of application: **11.12.2024**
(21) Application number: 23791895.8
(22) Date of filing: 19.04.2023
(51) Int. Cl.: A01C 11/00, A01B 69/00, A01G 13/00

(54) **TREE-PLANTING MACHINE, TREE-PLANTING SYSTEM, AND TREE-PLANTING MACHINE CONTROL METHOD**

(30) Priority: 19.04.2022 JP 2022068982
(71) Applicant: Komatsu Ltd., Minato-ku Tokyo 107-8414 (JP)
(72) Inventor: TOGASHI Ryoichi, Tokyo 107-8414 (JP); UENO Mitsuru, Tokyo 107-8414 (JP)
(74) Representative: Global IP Europe Patentanwaltskanzlei
(86) International application number: PCT/JP2023/015619
(87) International publication number: WO 2023/204247

(57) **Abstract**

A reforestation machine includes: a main body; a planting device which plants a plant body for reforestation at a predetermined position of soil; a traveling device which allows the main body and the planting device to travel; a power source which drives the traveling device; and a barrier installation device which installs a weed barrier, restricting the growth of weeds growing around a position in which the plant body is planted, around the predetermined position of the soil.

## Description

### TECHNICAL FIELD

The present invention relates to a reforestation machine, a reforestation system, and a reforestation machine control method.

Priority is claimed on Japanese Patent Application No. 2022-068982, filed April 19, 2022, the content of which is incorporated herein by reference.

### BACKGROUND ART

Reforestation work includes the work of forming land suitable for planting trees and the work of planting tree seedlings or tree seeds on the land that has been formed to be suitable for planting trees. Since the reforestation work is performed over a large area of land, there have been proposals to mechanize the process in recent years. For example, Patent Document 1 describes a technique for using a plurality of vehicles to perform works of plowing land and planting plants.

### RELATED ART DOCUMENT

### PATENT DOCUMENT

[Patent Document 1]
Japanese Unexamined Patent Application, First Publication No. 2017-131199

### SUMMARY

### PROBLEMS TO BE SOLVED BY THE INVENTION

By the way, if weeds grow in the planted areas, they may hinder the growth of the plants. Therefore, it is necessary to install sheets and the like in the land in order to restrict the growth of weeds. However, it takes time since the installation of the sheets and the like needs to be done manually by the worker.

Therefore, an object of the present invention is to provide a reforestation machine, a reforestation system, and a reforestation machine control method capable of suppressing the growth of plants from being hindered without requiring much effort from a worker.

### MEANS FOR SOLVING THE PROBLEM

A reforestation machine according to an aspect of the present invention includes: a main body; a planting device which plants a plant body for reforestation at a predetermined position of soil; a traveling device which allows the main body and the planting device to travel; a power source which drives the traveling device; and a barrier installation device which installs a weed barrier, restricting the growth of weeds growing around a position in which the plant body is planted, around the predetermined position of the soil.

### ADVANTAGE OF THE INVENTION

According to the above aspect, it is possible to suppress the growth of plants from being hindered without requiring much effort from the worker.

### BRIEF DESCRIPTION OF THE DRAWINGS

FIG. 1 is a perspective view showing an example of a reforestation area to which a reforestation machine according to a first embodiment is applied.
FIG. 2 is a perspective view of the reforestation machine according to the first embodiment.
FIG. 3 is a schematic view of a reforestation system according to the first embodiment.
FIG. 4 is a block diagram of the reforestation system according to the first embodiment.
FIG. 5 is a schematic view of a reforestation machine according to a second embodiment.
FIG. 6 is a schematic view of a reforestation system according to a third embodiment.
FIG. 7 is a schematic view of a reforestation machine according to a fourth embodiment.
FIG. 8 is a schematic view of a reforestation machine according to a fifth embodiment.
FIG. 9 is a diagram showing an example of cultivated soil formed by a cultivating machine.
FIG. 10 is a diagram showing an example of cultivated soil formed by a cultivating machine.
FIG. 11 is a schematic view of a reforestation machine according to a sixth embodiment.

### DESCRIPTION OF THE EMBODIMENTS

Hereinafter, embodiments of the present invention will be described with reference to the drawings. In the embodiments, as an example of a reforestation system including a reforestation machine, an example in which a device for restricting the growth of weeds is applied to a reforestation machine will be described.

### <First embodiment>

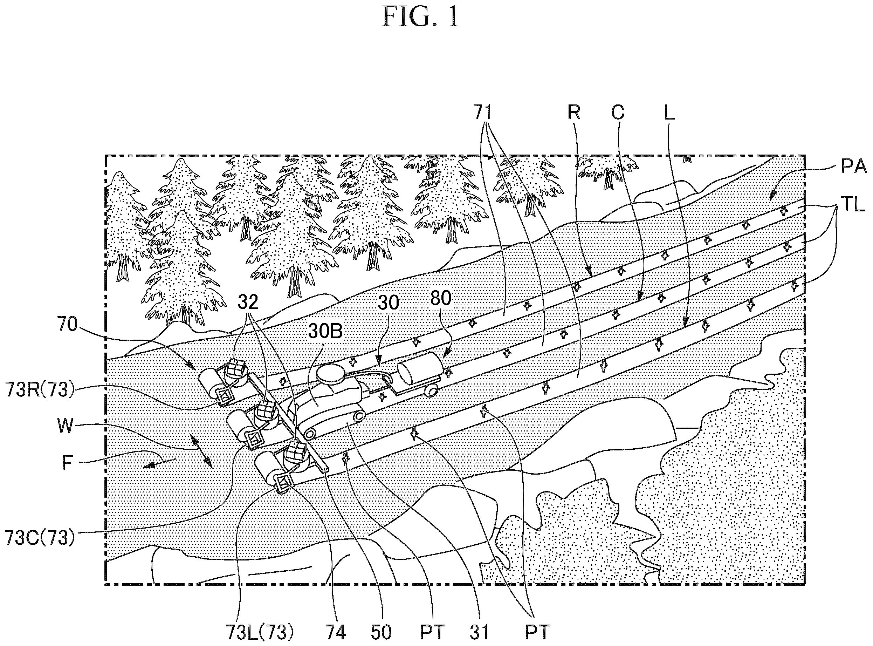

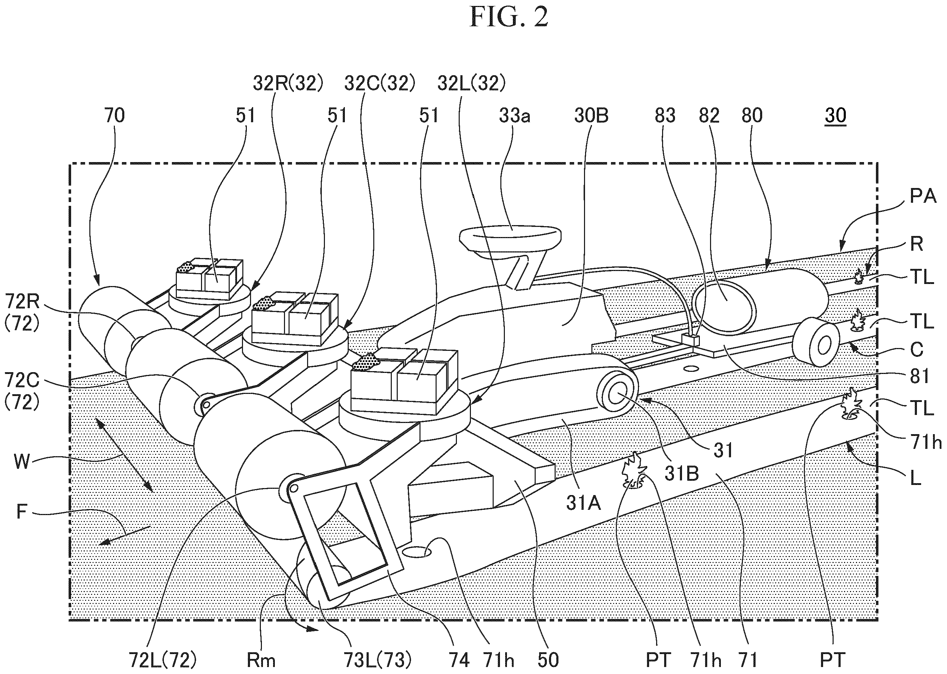

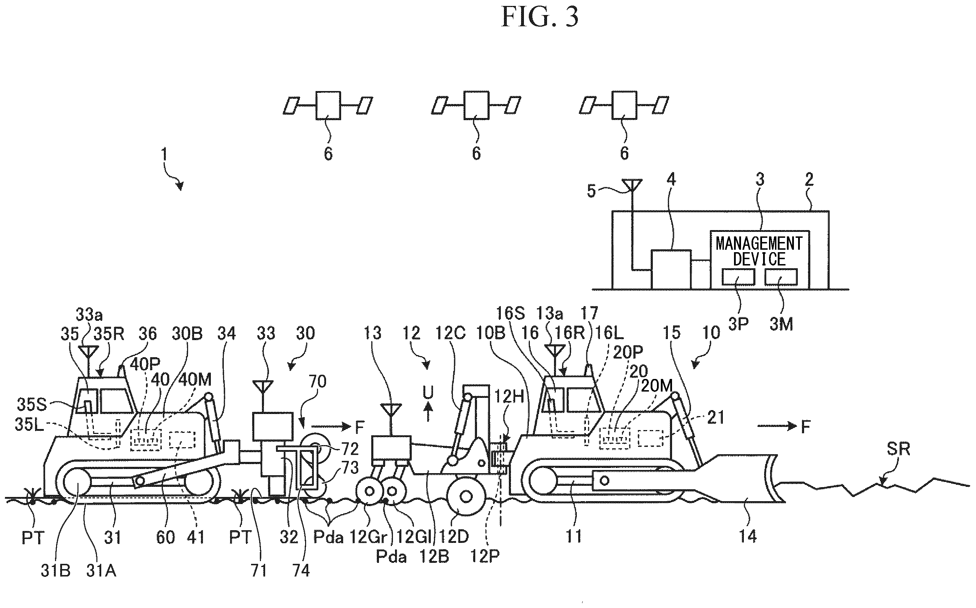

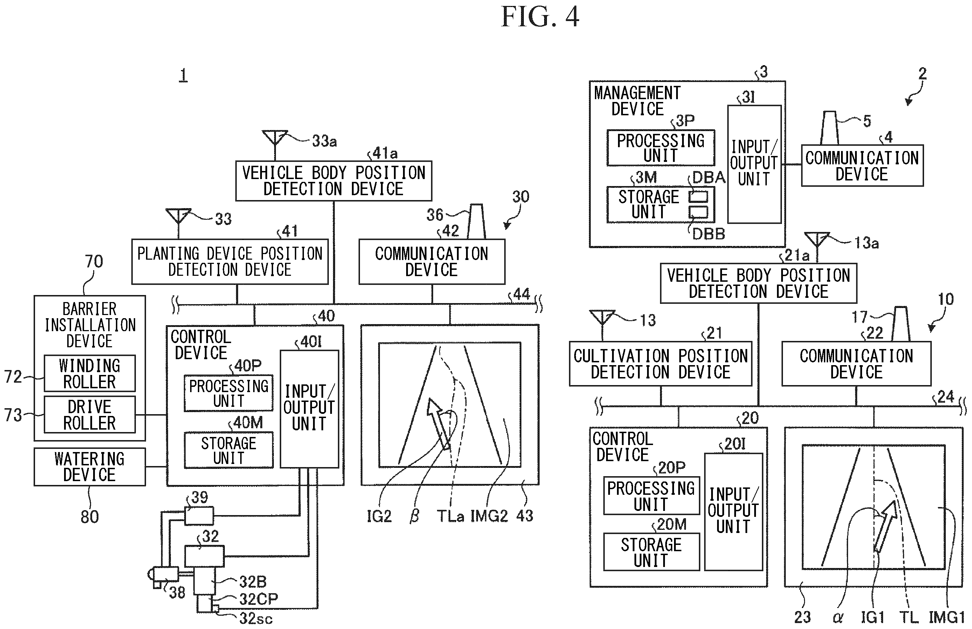

FIG. 1 is a perspective view showing an example of a reforestation area PA to which a reforestation machine 30 according to a first embodiment is applied. FIG. 2 is a perspective view of the reforestation machine 30 according to the first embodiment. FIG. 3 is a schematic view of a reforestation system 1 according to the first embodiment. FIG. 4 is a block diagram of the reforestation system 1 according to the first embodiment.

For example, at the reforestation planning stage, a plurality of target reforestation lines TL (three are shown in the illustrated example) extending parallel to each other are set in the reforestation area PA.

The interval between adjacent target reforestation lines TL is, for example, about 3 m to 5 m, but the present invention is not limited thereto. The length of the target reforestation line TL may range from several hundred meters to several kilometers, but the present invention is not limited thereto. For example, the planned target reforestation line TL may be stored in a storage unit 3M of a management device 3, a storage unit 20M of the cultivating machine 10, and a storage unit 40M of the reforestation machine 30.

### <Reforestation system>

The reforestation system 1 includes the management device 3 which manages a target reforestation position, the cultivating machine 10 which cultivates soil, and the reforestation machine 30 which plants a plant body PT for reforestation. The reforestation system 1 sets an actual cultivation position Pda, which indicates the position of the soil (hereinafter, also referred to as "cultivated soil") that has been cultivated by the cultivating machine 10 in order to plant the plant body PT, as a target when the reforestation machine 30 plants the plant body PT for reforestation in the cultivated soil. For example, the plant body PT for reforestation includes tree seedlings and tree seeds used for reforestation. Furthermore, in the reforestation system 1, the cultivating machine 10 is not an essential component. For example, the reforestation system can plant trees on soil without cultivating the soil. For example, the configuration aspect of the reforestation system can be changed according to required specifications.

### <Cultivating machine>

The cultivating machine 10 cultivates uncultivated soil SR that has not been cultivated for reforestation, along the target reforestation line TL. The cultivating machine 10 includes a cultivating traveling device 11, a cultivating device 12, and a cultivation position detection device 21. The cultivating traveling device 11 allows the cultivating machine 10 to travel. For example, the cultivating traveling device 11 travels by transmitting power of a power source such as an internal combustion engine or an electric motor to a crawler belt, but is not limited to such a device. For example, the cultivating traveling device 11 may travel by transmitting power from a power source to wheels.

In the cultivating machine 10, the direction from a driver's seat 16S in a cab 16 toward an operating device 16L is the front or forward. The rear or backward of the cultivating machine 10 is the direction from the operating device 16L toward the driver's seat 16S. The left and right sides of the cultivating machine 10 are determined based on the front. The width direction of the cultivating machine 10 is the direction from the driver's seat 16S toward the operating device 16L and the direction orthogonal to the height direction (up to down direction) of the cultivating machine 10.

The cultivating machine 10 has a blade 14 on the front side in a traveling direction F. The cultivating machine 10 has the cultivating device 12 on the rear side in the traveling direction F. The blade 14 is a device for removing stumps, tree debris, rocks, and the like remaining in the uncultivated soil SR after felling. The cultivating device 12 cultivates the uncultivated soil SR to form soil (cultivated soil) cultivated for planting the plant body PT. The cultivating machine 10 removes stumps and the like remaining in the uncultivated soil SR after felling with the blade 14 and forms cultivated soil with the cultivating device 12 while traveling in the traveling direction F along the target reforestation line TL.

The cultivating device 12 includes a main body 12B, a crushing disk 12D, cultivating disks 12Gl and 12Gr, and a hydraulic cylinder 12C. The crushing disk 12D, the cultivating disks 12Gl and 12Gr, and the hydraulic cylinder 12C are attached to the main body 12B. For example, the crushing disk 12D is disposed in front of the cultivating disks 12Gl and 12Gr. For example, the crushing disk 12D has a disk shape larger than the cultivating disks 12Gl and 12Gr. The crushing disk 12D rotates with the movement of the cultivating device 12 and crushes stumps and the like remaining in the uncultivated soil SR after felling. For example, stumps and the like may be crushed into smaller pieces by passing the plurality of small cultivating disks 12Gl and 12Gr along the route taken by the crushing disk 12D.

The cultivating disks 12Gl and 12Gr cultivate the uncultivated soil SR through which the crushing disk 12D has passed while rotating with the movement of the cultivating device 12 to thereby form the cultivated soil. For example, the cultivating device 12 includes two cultivating disks 12Gl and 12Gr. Furthermore, the number of cultivating disks 12Gl and 12Gr is not limited to two and can be changed according to the required specifications. The hydraulic cylinder 12C presses the main body 12B against the uncultivated soil SR.

In the example of FIG. 1, three target reforestation lines TL are shown. For example, in this case, three sets of one crushing disk 12D and the plurality of cultivating disks 12Gl and 12Gr may be provided. For example, the number of sets of each disk may be set according to the number of target reforestation lines TL. For example, the number of sets of each disk can be changed according to the required specifications.

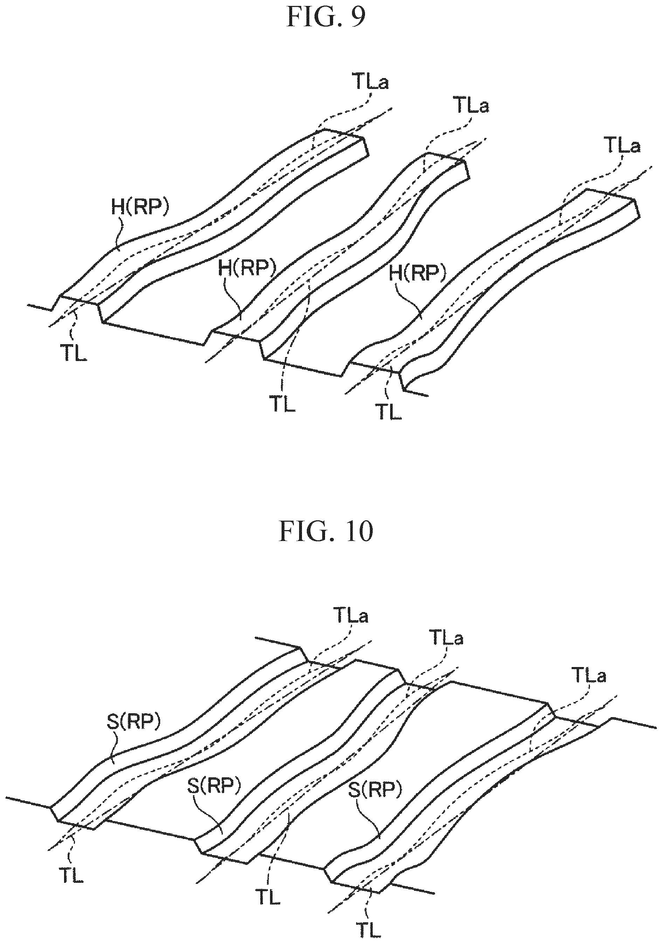

Here, an example of a cultivated line (cultivated soil) formed by the cultivating machine 10 will be described. In the example of FIG. 9, a ridge H extending in a line is shown. For example, the cultivating machine 10 may form the ridge H along the target reforestation line TL as cultivated soil RP. In the example of FIG. 10, a furrow S extending in a line is shown. For example, the cultivating machine 10 may form the furrow S along the target reforestation line TL as the cultivated soil RP. Furthermore, the cultivated soil RP is not limited to the ridge H or the furrow S. For example, the aspect of the cultivated soil can be changed according to required specifications.

The main body 12B of the cultivating device 12 is attached to a vehicle body 10B of the cultivating machine 10 through a connecting mechanism 12H. The connecting mechanism 12H includes a pin 12P which extends along an axis parallel to the up to down direction of the vehicle body 10B. The connecting mechanism 12H connects the cultivating device 12 and the vehicle body 10B by the pin 12P. With such a structure, the cultivating device 12 rotates about the pin 12P. Therefore, the cultivating device 12 can rotate left and right with respect to the vehicle body 10B. The position of the cultivating device 12 in the height direction U can be adjusted by the hydraulic cylinder 12C.

Since the cultivating device 12 can rotate left and right with respect to the vehicle body 10B of the cultivating machine 10, the cultivating device can follow the shape of the uncultivated soil SR that forms the cultivated soil. The areas targeted for reforestation are often wastelands containing tree stumps and rocks after felling. Therefore, since the cultivating device 12 can be rotated left and right with respect to the vehicle body 10B, it is possible to suppress malfunctions of the cultivating device 12 caused by remaining stumps, rocks, and the like.

The cultivating machine 10 includes a control device 20, a cultivation position detection antenna 13, a cultivation position detection device 21, a vehicle body position detection antenna 13a, and a vehicle body position detection device 21a. The cultivation position detection device 21 obtains and outputs the actual cultivation position Pda which is a position corresponding to the position of the cultivating device 12 by the cultivation position detection antenna 13

For example, the continuum of the actual cultivation position Pda becomes an actual cultivation line TLa. For example, when there are three target reforestation lines TL, three cultivating devices corresponding to these lines may be arranged. For example, in this case, the positions of three cultivating devices may be identified at each predetermined time, and the line having a predetermined width through which the cultivating devices have passed may be regarded as the actual cultivation line.

While the cultivating device 12 travels together with the cultivating traveling device 11 to cultivate the uncultivated soil SR, the cultivation position detection device 21 obtains and outputs the plurality of actual cultivation positions Pda. Here, the plurality of actual cultivation positions Pda are the plurality of actual cultivation positions for forming one actual cultivation line TLa. The actual cultivation position Pda is a position of the uncultivated soil SR cultivated by the cultivating device 12, and is a reference position for reforestation the plant body PT. For example, the actual cultivation position Pda may be formed by each of the plurality of cultivating disks 12Gl and 12Gr or may be formed by one crushing disk 12D. The actual cultivation position Pda output by the cultivation position detection device 21 of the target reforestation area is transmitted to the management device 3 and stored in the storage unit 3M of the management device 3. For example, the target reforestation area is an area that includes a pinpoint area in which seedlings are to be planted, and includes an area that is to become the actual cultivation position Pda.

The locus of the actual cultivation position Pda accompanying the movement of the cultivating machine 10 becomes a line. When the cultivating machine 10 moves along the target reforestation line TL, the locus of the actual cultivation position Pda is also formed along the target reforestation line TL. Hereinafter, the locus of the actual cultivation position Pda formed in a line shape will be referred to as the actual cultivation line TLa. The storage unit 3M of the management device 3 stores the actual cultivation position Pda or the actual cultivation line TLa.

The cultivating machine 10 includes a hydraulic cylinder 15 for raising and lowering the blade 14, the cab 16, and a communication antenna 17. The hydraulic cylinder 15 is an actuator for raising and lowering the blade 14. The cab 16 is disposed above the cultivating traveling device 11 (on the side away from the ground contact surface of the cultivating traveling device 11).

For example, the cultivating traveling device 11 may be an unmanned vehicle that travels automatically using RTK-GNSS (Real Time Kinematic-Global Navigation Satellite Systems, GNSS stands for Global Navigation Satellite System) and inertial navigation. In this case, the control device 20 of the cultivating machine 10 allows the cultivating machine 10 to travel along the target reforestation line TL using the position of the vehicle obtained by GNSS and an IMU (Inertial Measurement Unit) or the position of the vehicle obtained by inertial navigation. For example, the cultivating machine 10 may be driven along a target traveling line determined based on the target cultivation line (for example, the target reforestation line TL) using the position of the vehicle measured by GNSS or inertial navigation.

Furthermore, the cab 16 may be a room in which an operator of the cultivating machine 10 rides and operates the cultivating machine 10. For example, the cultivating machine 10 may be a manned vehicle.

The communication antenna 17 is a device that allows the cultivating machine 10 to communicate with the management device 3. For example, the communication antenna 17 is attached to a roof 16R of the cab 16. Furthermore, the attachment area of the communication antenna 17 is not limited to the roof 16R, but can be changed according to required specifications.

The cultivation position detection antenna 13 is a device that allows the cultivation position detection device 21 to obtain the actual cultivation position Pda of the soil cultivated by the cultivating device 12. The cultivation position detection device 21 obtains the actual cultivation position Pda by, for example, GNSS. The cultivation position detection device 21 acquires a signal corresponding to the GNSS radio wave received from a positioning satellite 6 by the cultivation position detection antenna 13. The cultivation position detection device 21 obtains the actual cultivation position Pda based on the signal corresponding to the received GNSS radio wave.

The vehicle body position detection antenna 13a is a device that allows the vehicle body position detection device 21a to obtain the position of the vehicle body 10B of the cultivating machine 10. The vehicle body position detection antenna 13a is provided in the vehicle body 10B. Since the method for obtaining the position of the vehicle body 10B by the vehicle body position detection antenna 13a is the same as the method for obtaining the actual cultivation position Pda by the cultivation position detection antenna 13, detailed description will be omitted.

Furthermore, the cultivating machine 10 may not include both the cultivation position detection antenna 13 and the vehicle body position detection antenna 13a. For example, if the relative positional relationship between the cultivation position of the cultivating device 12 and the vehicle body 10B can be detected, any one of the cultivation position detection antenna 13 and the vehicle body position detection antenna 13a may be omitted. The control device 20 may obtain the actual cultivation position Pda or the position of the vehicle body 10B from the position information obtained by the other of the cultivation position detection antenna 13 and the vehicle body position detection antenna 13a. In this case, the position detection device corresponding to the omitted position detection antenna can also be omitted. The actual cultivation position Pda and the position of the vehicle body 10B are represented, for example, in two-dimensional coordinates represented in the global coordinate system, but these may also be represented in three-dimensional coordinates.

Next, an example of a control system involved with the cultivating machine 10 will be described.

The cultivating machine 10 includes the control device 20, the cultivation position detection device 21, the vehicle body position detection device 21a, a communication device 22, and a display device 23. The components of the cultivating machine 10 are connected to related elements by signal lines 24. The components of the cultivating machine 10 can exchange information with related elements via the signal lines 24. The signal line 24 is, for example, a signal line of an in-vehicle LAN (Local Network System) conforming to a standard such as CAN (Controller Area Network).

The control device 20 includes a processing unit 20P which is a processor such as CPU (Central Processing Unit), the storage unit 20M such as a RAM (Random Access Memory), a ROM (Read Only Memory), and a combination thereof, and an input/output unit 20I. The processing unit 20P controls the operation of the cultivating machine 10. The storage unit 20M stores computer programs for implementing the functions of the processing unit 20P, information necessary for the processing of the processing unit 20P, and the like. The input/output unit 20I is an interface circuit between the control device 20 and other devices.

The cultivation position detection device 21 acquires a signal corresponding to the GNSS radio wave received by the cultivation position detection antenna 13 to obtain the position (that is, the actual cultivation position Pda) of the cultivation position detection antenna 13. The cultivation position detection device 21 transmits the obtained actual cultivation position Pda to the management device 3 via the communication device 22 and the communication antenna 17. The management device 3 stores the actual cultivation position Pda in the storage unit 3M.

For example, the cultivation position detection device 21 may acquire a signal corresponding to the GNSS radio wave received by the cultivation position detection antenna 13 from the positioning satellite 6 at a predetermined period and obtain the actual cultivation position Pda based on the acquired signal. In this case, the actual cultivation position Pda is obtained at a predetermined period. For example, if the predetermined period is 100 ms, ten actual cultivation positions Pda are obtained per second.

For example, one actual cultivation position Pda is a limited cultivated area (point), but the present invention is not limited thereto. For example, the size of one actual cultivation position Pda may be a circle with a diameter of about 1 m. For example, the size of one actual cultivation position Pda may be a circle with a diameter of several millimeters to several meters by taking into consideration the thickness of the seedlings to be planted and the thickness of the tree after growth (for example, a large tree), but the present invention is not limited thereto. For example, if the purpose is to ultimately identify a line having a predetermined width called the actual cultivation line TLa, the shape of one actual cultivation position Pda may be a rectangular area. For example, the size and shape of one actual cultivation position Pda can be changed according to required specifications.

The actual cultivation position Pda is obtained a plurality of times while the cultivating machine 10 is traveling. Since the actual cultivation line TLa is a collection of the plurality of actual cultivation positions Pda, there are some portions where the actual cultivation positions Pda do not exist. Here, the portion where no actual cultivation position Pda exists is a portion other than the portion on a predetermined line (for example, the target reforestation line TL) where the actual cultivation position Pda exists intermittently along the predetermined line. The value of the portion where no actual cultivation position Pda exists may be obtained, for example, by interpolating the values of two adjacent actual cultivation positions Pda and Pda. In this way, the actual cultivation line TLa can be obtained from the plurality of actual cultivation positions Pda.

For example, the control device 20 may store the actual cultivation position Pda in the storage unit 20M within a predetermined period. In this case, after a predetermined period of time has elapsed, the control device 20 may read out the actual cultivation position Pda stored in the storage unit 20M and transmit the actual cultivation position Pda to the management device 3 via the communication device 22 and the communication antenna 17. The predetermined period may be, for example, the period until the cultivating machine 10 completes the cultivating work from one end of the reforestation area PA along one target reforestation line TL, but the present invention is not limited thereto.

For example, the control device 20 stores the position (that is, the actual cultivation position Pda) of the cultivation position detection antenna 13 obtained by the cultivation position detection device 21 in the storage unit 20M. When the work of forming the cultivated soil by the cultivating machine 10 is completed, the control device 20 may read out the actual cultivation position Pda acquired from the start to the end of the forming work from the storage unit 20M and transmit the actual cultivation position Pda to the management device 3 via the communication device 22 and the communication antenna 17.

The display device 23 may be provided in the cab 16. The display device 23 displays a guidance screen IMG1. The guidance screen IMG1 displays a deviation α between a traveling direction IG1 of the cultivating machine 10 and the target reforestation line TL. The target reforestation line TL is set in advance when planning reforestation. For example, the target reforestation line TL may be stored in the storage unit 20M of the cultivating machine 10. For example, the target reforestation line TL may be stored in the storage unit 3M of the management device 3 and acquired from the management device 3 via the communication devices 4 and 22.

For example, the cultivating machine 10 may be controlled by automatic operation so that the deviation α displayed on the guidance screen IMG1 becomes zero. For example, the traveling direction of the cultivating machine 10 may be changed by automatically operating the operating device 16L of the cultivating machine 10.

The control device 20 can obtain the traveling direction IG1 of the cultivating machine 10 from the position of the vehicle body 10B obtained by the vehicle body position detection device 21a. For example, the control device 20 may also use the IMU to obtain the traveling direction IG1 of the cultivating machine 10. The control device 20 obtains the traveling direction IG1 of the cultivating machine 10 and obtains the deviation α between the traveling direction IG1 and the target reforestation line TL read out from the storage unit 20M. The control device 20 allows the display device 23 to display the target reforestation line TL, the obtained deviation α, and the traveling direction IG1 as the guidance screen IMG1.

### <Management device>

The management device 3 is installed in a management facility 2. The management device 3 includes a processing unit 3P which is a processor such as a CPU, the storage unit 3M which is a RAM, a ROM, or a combination thereof, and an input/output unit 3I. The processing unit 3P manages information received from the cultivating machine 10 and the reforestation machine 30. The processing unit 3P manages information to be transmitted to the cultivating machine 10 and the reforestation machine 30.

The communication device 4 is connected to the input/output unit 3I of the management device 3. The management device 3 communicates with the cultivating machine 10 and the reforestation machine 30 via an antenna 5 of the communication device 4. The management device 3 stores at least one of the actual cultivation position Pda and the actual cultivation line TLa acquired from the cultivating machine 10 via the communication device 4 in the storage unit 3M. For example, the management device 3 transmits at least one of the actual cultivation position Pda and the actual cultivation line TLa stored in the storage unit 3M to the reforestation machine 30 in response to a request from the reforestation machine 30. For example, the management device 3 transmits the target reforestation line TL stored in the storage unit 3M to the cultivating machine 10 and the reforestation machine 30.

For example, the communication of the management device 3 with respect to the cultivating machine 10 and the reforestation machine 30 is wireless communication. Furthermore, the exchange of information in the reforestation system 1 is not limited to wireless communication. The exchange of information in the reforestation system 1 may be performed by wired communication or by a recording medium such as a USB (Universal Serial Bus) memory.

At least one of the actual cultivation position Pda and the actual cultivation line TLa transmitted from the cultivating machine 10 may be stored in the storage unit 3M as, for example, a first database DBA. When the reforestation machine 30 transmits the actual planting position to the management device 3, the actual planting position may be stored in the storage unit 3M as, for example, a second database DBB.

### <Reforestation machine>

The reforestation machine 30 is operated along the plurality of actual cultivation positions Pda or the actual cultivation line TLa to perform a planting work along the plurality of actual cultivation positions Pda or the actual cultivation line TLa. The actual cultivation position Pda is an example of a managed reforestation position. The reforestation machine 30 includes a planting device 32, a reforestation traveling device 31, a planting device position detection device 41, and a control device 40.

The reforestation traveling device 31 allows a vehicle body 30B of the reforestation machine 30 and the planting device 32 to travel. The reforestation traveling device 31 includes a pair of crawler belts 31A, a sprocket 31B, and an idler. When the pair of crawler belts 31A rotate in accordance with the driving of the sprocket 31B, the reforestation traveling device 31 travels. For example, the reforestation traveling device 31 travels by transmitting power of a power source such as an internal combustion engine or an electric motor to a crawler belt, but is not limited to such a device. For example, the reforestation traveling device 31 may travel by transmitting power of a power source to wheels.

In the reforestation machine 30, the direction from a driver's seat 35S in a cab 35 toward an operating device 35L is the front or forward. The rear or backward of the reforestation machine 30 is the direction from the operating device 35L toward the driver's seat 35S. The left and right sides of the reforestation machine 30 are determined based on the front. The width direction of the reforestation machine 30 is the direction from the driver's seat 35S toward the operating device 35L and the direction orthogonal to the height direction (up to down direction) of the reforestation machine 30.

The planting device 32 plants the plant body PT in the cultivated soil (an example of a predetermined position in the soil). The reforestation machine 30 is operated along the actual cultivation line TLa, so that the planting device 32 plants the plant bodies PT at predetermined intervals in the traveling direction F along the actual cultivation line TLa. Since the actual cultivation line TLa is the portion which is actually cultivated by the cultivating device 12 of the cultivating machine 10, it is possible to reduce the deviation between the planting device 32 and the actual cultivation line TLa by operating the reforestation machine 30 along the actual cultivation line TLa. Furthermore, the reforestation machine 30 may be driven along the target reforestation line TL. The target reforestation line TLa is the locus for planting the plurality of plant bodies PT at predetermined intervals. For example, the reforestation machine 30 may be operated along the target traveling line determined based on the position of the actual cultivation line TLa.

In the embodiment, the reforestation machine 30 includes three (an example of a plurality of) planting devices 32. For example, the reforestation machine 30 may simultaneously plant the plant bodies PT in three of the plurality of linear ridges or furrows. In the example of the drawing, the reforestation machine 30 plants the plant body PT on the actual cultivation line TLa of the ridge or furrow corresponding to the rows R, C, and L. The reforestation machine 30 travels along the actual cultivation line TLa of the center row C in the rows R, C, and L. For example, when there are three actual cultivation lines TLa, for example, the middle actual cultivation line TLa may be set as the target traveling line. In this case, the reforestation machine 30 may travel so that the center follows the target traveling line. For example, the traveling aspect of the reforestation machine 30 can be changed according to required specifications.

Three planting devices 32 are fixed to a beam 50. The beam 50 is provided in front of the vehicle body 30B (an example of the main body) of the reforestation machine 30. The beam 50 extends along the width direction W of the reforestation machine 30. In the width direction W of the reforestation machine 30, the length of the beam 50 is longer than the width of the vehicle body 30B. The beam 50 protrudes from the pair of crawler belts 31A to the left and right. The beam 50 is connected to the vehicle body 30B through an arm 60.

Three planting devices 32 are arranged side by side in the width direction W of the reforestation machine 30. Three planting devices 32 are attached to the center, the left end, and the right end of the beam 50. Three planting devices 32 include a center planting device 32C, a left planting device 32L, and a right planting device 32R.

A plurality of plant trays 51 can be placed on the upper surface of the planting device 32. The plant tray 51 is divided into a plurality of spaces. The seedling is disposed in each of divided spaces. For example, a pipe-shaped member having a beak-shaped lower end may be provided inside the planting device 32. For example, the planting device 32 may form a hole in the ground using a pipe-shaped member. For example, the seedlings placed on the plant tray 51 may be dropped through the pipe-shaped member and the beak may be opened to place the seedling into the hole in the ground.

For example, the planting device 32 may be provided with a hydraulic cylinder 38 for moving the planting device 32 in the width direction W. For example, a main body 32B of the planting device 32 may be provided with a telescopic portion 32CP configured to be able to expand and contract. For example, the hydraulic cylinder 38 applies a hydraulic pressure to expand and contract the telescopic portion 32CP of the planting device 32. For example, the hydraulic cylinder 38 may be provided with a directional control valve 39 for changing the direction and amount of hydraulic oil supplied to the hydraulic cylinder 38. For example, the telescopic portion 32CP may be provided with a pressure sensor 32sc that detects the hydraulic pressure of the hydraulic cylinder for expanding and contracting the telescopic portion 32CP. For example, the configuration aspect of the planting device 32 can be changed according to required specifications.

The planting device 32 is attached to the reforestation traveling device 31 through the arm 60. The planting device 32 is disposed on the front side of the reforestation machine 30 in the traveling direction F. The planting device 32 may be disposed on the rear side of the reforestation machine 30 in the traveling direction F. The reforestation machine 30 includes a planting device position detection antenna 33, a vehicle body position detection antenna 33a, the planting device position detection device 41, and a vehicle body position detection device 41a. Furthermore, the planting device position detection antenna 33, the vehicle body position detection antenna 33a, the planting device position detection device 41, and the vehicle body position detection device 41a are examples of a traveling position detection device that detects the traveling position of the reforestation machine 30.

The planting device position detection device 41 is a device which obtains and outputs the position of the planting device 32 by the planting device position detection antenna 33. The control device 40 acquires the actual cultivation line TLa from the management device 3 via the communication device 4 and a communication device 42 of the reforestation machine 30. The control device 40 controls the hydraulic cylinder 38 based on the acquired actual cultivation line TLa and the current position of the planting device 32 obtained by the planting device position detection device 41. Accordingly, the position or posture of the planting device 32 is adjusted. The current position of the planting device 32 is the position of the planting device 32 obtained by the planting device position detection device 41 at the timing when the plant body PT is planted. For example, the timing when the plant body PT is planted is the timing between when the reforestation machine 30 stops to plant the plant body PT in the cultivated soil and when the planting device 32 plants the plant body PT in the cultivated soil.

The reforestation machine 30 includes a hydraulic cylinder 34, the cab 35, and a communication antenna 36. The hydraulic cylinder 34 is an actuator for raising and lowering the planting device 32. The cab 35 is disposed above the reforestation traveling device 31 (on the side away from the ground contact surface of the reforestation traveling device 31).

For example, the reforestation traveling device 31 may be an unmanned vehicle that travels autonomously using GNSS, inertial navigation, or the like. In this case, the control device 40 of the reforestation machine 30 allows the reforestation machine 30 to travel along the actual cultivation line TLa using the position of the vehicle obtained by GNSS or the position of the vehicle obtained by inertial navigation.

Furthermore, the cab 35 may be a room in which an operator of the reforestation machine 30 rides and operates the reforestation machine 30. For example, the reforestation machine 30 may be a manned vehicle.

The communication antenna 36 is a device that allows the control device 40 of the reforestation machine 30 to communicate with the management device 3. For example, the communication antenna 36 is attached to a roof 35R of the cab 35. Furthermore, the attachment area of the communication antenna 36 is not limited to the roof 35R, but can be changed according to required specifications.

The planting device position detection antenna 33 is a device that allows the planting device position detection device 41 to obtain the position of the planting device 32. The planting device position detection device 41 is attached to the planting device 32. The planting device position detection device 41 obtains the position of the planting device 32 by, for example, RTK-GNSS. Since the method for obtaining the position of the planting device 32 by the planting device position detection antenna 33 is the same as the method for obtaining the actual cultivation position Pda of the cultivating machine 10 by the cultivation position detection antenna 13, detailed description will be omitted.

For example, the planting device position detection antenna 33 is attached to the planting device 32. Accordingly, since the planting device position detection antenna 33 moves together with the planting device 32 even when the posture of the planting device 32 changes relative to the vehicle body 30B of the reforestation machine 30, the planting device position detection device 41 can accurately obtain the position of the planting device 32. For example, the planting device position detection antenna 33 is attached to the planting device 32C (center planting device 32C) disposed in the center of the width direction W among three planting devices 32.

The vehicle body position detection antenna 33a is a device that allows the vehicle body position detection device 41a to obtain the position of the vehicle body 30B of the reforestation machine 30. The vehicle body position detection antenna 33a is provided in the vehicle body 30B. Since the method for obtaining the position of the vehicle body 10B by the vehicle body position detection antenna 13a is the same as the method for obtaining the actual cultivation position Pda by the cultivation position detection antenna 13, detailed description will be omitted.

Furthermore, the reforestation machine 30 may not include both the planting device position detection antenna 33 and the vehicle body position detection antenna 33a. For example, when the relative positional relationship between the position of the planting device 32 and the position of the vehicle body 30B can be detected, any one of the planting device position detection antenna 33 and the vehicle body position detection antenna 33a may be omitted. The control device 40 may obtain the position of the planting device 32 or the position of the vehicle body 30B from the position information obtained by the other of the planting device position detection antenna 33 and the vehicle body position detection antenna 33a. In this case, the position detection device corresponding to the omitted position detection antenna can also be omitted. The position of the planting device 32 obtained by the planting device position detection device 41 and the position of the vehicle body 30B obtained by the vehicle body position detection device 41a are represented, for example, as two-dimensional information represented in the global coordinate system, but may also be represented as three-dimensional information.

Next, an example of a control system involved with the reforestation machine 30 will be described.

The reforestation machine 30 includes the control device 40, the planting device position detection device 41, the vehicle body position detection device 41a, the communication device 42, and a display device 43. The components of the reforestation machine 30 are connected to related elements by signal lines 44. The components of the reforestation machine 30 can exchange information with related elements via the signal lines 44. The signal line 44 is, for example, a signal line of an in-vehicle LAN conforming to a standard such as CAN.

The control device 40 includes a processing unit 40P which is a processor such as CPU, the storage unit 40M such as a RAM, a ROM, and a combination thereof, and an input/output unit 40I. The processing unit 40P controls the operation of the reforestation machine 30. The storage unit 40M stores computer programs for implementing the functions of the processing unit 40P, information necessary for the processing of the processing unit 40P, and the like. The input/output unit 40I is an interface circuit between the control device 40 and other devices.

Before the reforestation work by the planting device 32, the control device 40 acquires the actual cultivation line TLa obtained by the cultivation position detection device 21 from the management device 3 via the communication device 42 and the communication antenna 36. When the planting device 32 plants the plant body PT in the cultivated soil, the control device 40 allows the planting device position detection device 41 to acquire a signal corresponding to the GNSS radio wave received by the planting device position detection antenna 33. Accordingly, the planting device position detection device 41 obtains the position of the planting device position detection antenna 33. The position of the planting device position detection antenna 33 corresponds to the position of the planting device 32. The control device 40 acquires the position of the planting device position detection antenna 33 (that is, the current position of the planting device 32) that is obtained and output by the planting device position detection device 41.

The control device 40 compares the actual cultivation line TLa acquired from the management device 3 with the position of the planting device 32 obtained by the planting device position detection device 41. The control device 40 operates the hydraulic cylinder 38 to move the planting device 32 in the width direction W until the distance (hereinafter, also referred to as the "position difference") between the current position of the planting device 32 and the actual cultivation line TLa becomes shorter than the allowable value. The allowable value is determined based on the accuracy of planting the plant body PT. The ideal allowable value is 0. When the hydraulic cylinder 38 is operated, the control device 40 changes the direction and amount of hydraulic oil supplied to the hydraulic cylinder 38 by controlling the directional control valve 39. Accordingly, the expansion/contraction amount of the hydraulic cylinder 38 is adjusted.

For example, when the position difference becomes equal to or smaller than the allowable value, the control device 40 lowers the telescopic portion 32CP of the planting device 32. The telescopic portion 32CP is provided with the pressure sensor 32sc that detects the hydraulic pressure of the hydraulic cylinder for expanding and contracting the telescopic portion 32CP. The control device 40 acquires the hydraulic pressure of the hydraulic cylinder from the pressure sensor 32sc. When the acquired hydraulic pressure is equal to or larger than a threshold value, the control device 40 determines that the telescopic portion 32CP has come into contact with the cultivated soil. In this case, the control device 40 controls the planting device 32 to plant the plant body PT in the cultivated soil.

The planting device position detection device 41 may obtain the position of the planting device position detection antenna 33 after the plant body PT is planted in the cultivated soil (that is, the position of the plant body PT planted by the planting device 32). The planting device position detection device 41 may transmit the obtained position information to the management device 3 via the communication device 42 and the communication antenna 36. Hereinafter, the position of the plant body PT planted by the planting device 32 is also referred to as the "actual planting position". The control device 40 may store a plurality of actual planting positions in the storage unit 40M within a predetermined period. In this case, the control device 40 may read out a plurality of actual planting positions from the storage unit 40M all at once after a predetermined period of time has elapsed and transmit them to the management device 3 via the communication device 42 and the communication antenna 36.

The display device 43 may be provided in the cab 35. The display device 43 displays a guidance screen IMG2. The guidance screen IMG2 displays a deviation β between a traveling direction IG2 of the reforestation machine 30 and the actual cultivation line TLa. The actual cultivation line TLa is stored in the storage unit 3M of the management device 3. The control device 40 acquires the actual cultivation line TLa from the management device 3 via the communication devices 4 and 42.

For example, the reforestation machine 30 may be controlled by automatic operation so that the deviation β displayed on the guidance screen IMG2 becomes zero. For example, the traveling direction of the reforestation machine 30 may be changed by automatically operating the operating device 35L of the reforestation machine 30. For example, the display device 43 may display the target reforestation line TL instead of the actual cultivation line TLa. In this case, the reforestation machine 30 may be controlled by automatic operation so that the traveling direction of the reforestation machine 30 follows the target reforestation line TL.

The control device 40 can obtain the traveling direction IG2 of the reforestation machine 30 from the position of the planting device position detection antenna 33 or the vehicle body position detection antenna 33a acquired from the planting device position detection device 41 or the vehicle body position detection device 41a. The control device 40 obtains the traveling direction IG2 of the reforestation machine 30 and obtains the deviation β between the target reforestation line TL read out from the storage unit 40M and the traveling direction IG2. The control device 40 allows the display device 43 to display the target reforestation line TL, the obtained deviation β, and the traveling direction IG2 as the guidance screen IMG2. For example, the display device 43 displays the actual cultivation line TLa (the line along which the reforestation machine 30 travels) of the center row C among the rows R, C, and L in which the plant body PT is planted as the actual cultivation line TLa of the guidance screen IMG2.

### <Barrier installation device>

The reforestation machine 30 includes a barrier installation device 70 which installs a weed barrier around a predetermined position in the soil to restrict the growth of weeds growing around the position in which the plant body PT is planted. The barrier installation device 70 installs a weed barrier in the soil at the timing before reforestation. The weed barrier is, for example, biodegradable. For example, the weed barrier has a shading effect. The weed barrier consists of a sheet 71. The sheet 71 is formed in a strip shape. The sheet 71 has a plurality of through holes 71h that are opened at predetermined intervals for planting the plant bodies. The plurality of through holes 71h are formed based on a pre-planned target reforestation position (for example, a predetermined position in the target reforestation area).

For example, the sheet 71 may be formed of a plant fiber such as a plurality of hemp fibers (for example, hemp jute fibers). For example, the sheet 71 may be formed of a polylactic acid fiber nonwoven fabric. For example, the sheet 71 may be formed of a biodegradable resin sheet. For example, the sheet 71 may be supplemented with nutrients to aid in the growth of the plant body. For example, the configuration aspect of the sheet 71 can be changed according to required specifications.

The barrier installation device 70 is provided in the planting device 32. The barrier installation device 70 is disposed on the front side of the planting device 32. The barrier installation device 70 is disposed on the front side of the reforestation traveling device 31 in the traveling direction F. The barrier installation device 70 includes a winding roller 72 which winds the sheet 71 and a drive roller 73 which rotates the winding roller 72 to feed the sheet 71 onto the soil.

The winding roller 72 and the drive roller 73 are arranged on the front side of the planting device 32. The winding roller 72 and the drive roller 73 are arranged side by side in the up to down direction of the reforestation machine 30. The winding roller 72 and the drive roller 73 are attached to the planting device 32 through the frame 74.

The winding roller 72 holds the strip-shaped sheet 71 wound in a roll to be rotatable about an axis (hereinafter, also referred to as the "winding axis") along the width direction W of the reforestation machine 30. The drive roller 73 can be rotated by a power source such as an electric motor about an axis parallel to the winding axis (hereinafter, also referred to as the "feeding axis"). For example, the drive roller 73 may be rotatable about the feeding axis in conjunction with the driving of the reforestation traveling device 31. For example, the drive roller 73 may rotate by being accompanied by friction between the ground and the sheet 71 without a power source such as an electric motor. The drive roller 73 rotates in the direction of arrow Rm about the feeding axis to feed the roll-shaped sheet 71 held by the winding roller 72 onto the soil.

The drive rollers 73 are provided in three pieces (an example of a plurality of pieces) at intervals in the width direction W of the reforestation machine 30. Three drive rollers 73 are arranged side by side in the width direction W of the reforestation machine 30. Three drive rollers 73 are arranged along the soil when viewed from the traveling direction of the reforestation traveling device. Three drive rollers 73 are provided to correspond to the center planting device 32C, the left planting device 32L, and the right planting device 32R. Three drive rollers 73 include a center drive roller 73C, a left drive roller 73L, and a right drive roller 73R.

The winding rollers 72 are provided at three pieces (an example of a plurality pieces) at intervals in the width direction W of the reforestation machine 30. The number of provided winding rollers 72 is the same as the number of drive rollers 73 (three drive rollers). Three winding rollers 72 are provided to correspond to the center drive roller 73C, the left drive roller 73L, and the right drive roller 73R. Three winding rollers 72 include a center drive roller 72C, a left drive roller 72L, and a right drive roller 72R.

The reforestation traveling device includes the pair of crawler belts 31A. Three drive rollers 73 do not overlap the crawler belt 31A when viewed from the traveling direction of the reforestation traveling device. The center drive roller 73C of three drive rollers 73 is disposed between the pair of left and right crawler belts 31A when viewed from the traveling direction F of the reforestation traveling device 31. The left drive roller 73L is disposed on the left side of the left crawler belt 31A when viewed from the traveling direction F of the reforestation traveling device 31. The right drive roller 73R is disposed on the right side of the right crawler belt 31A when viewed from the traveling direction F of the reforestation traveling device 31.

### <Watering device>

The reforestation machine 30 includes a watering device 80 that sprays water on the area in which the plant body PT is planted. The watering device 80 is disposed on the rear side of the reforestation traveling device 31 in the traveling direction F. The watering device 80 includes a dolly 81 which is towed by the reforestation traveling device 31, a water tank 82 which is provided on the dolly 81 and stores water, and a water supply device 83 which supplies the water in the water tank 82 onto the soil.

For example, the water in the water tank 82 is water used for reforestation work. For example, the water in the water tank 82 is water for irrigating seedlings when they are planted. For example, the water in the water tank 82 may be water from a river or a swamp, or gel water having a water-retaining effect. For example, the water in the water tank 82 may contain nutrients to aid in the growth of the plant body.

For example, the water supply device 83 may include a water supply pipe which connects the water tank 82 and the planting device 32, an opening/closing valve which is provided in the water supply pipe, and a water supply pump which supplies water in the water tank 82 to the opening/closing valve through the water supply pipe.

For example, the control device 40 controls the water supply device 83 to supply water in the water tank 82 to the soil. For example, the control device 40 may control the water supply device 83 to spray water around the base of the planted seedlings. For example, the control device 40 may supply water in the water tank 82 to the soil by opening the opening/closing valve at the timing when the seedlings are planted. For example, the control device 40 may adjust the amount of water supplied to the soil by controlling the opening time of the opening/closing valve.

### <Example of installation of weed barrier>

The control device 40 controls the reforestation machine 30 based on the target reforestation position (for example, a predetermined position of the target reforestation area) acquired from the management device 3. The control device 40 controls the position in which the weed barrier (for example, the sheet 71) is installed in the soil based on the target reforestation position acquired from the management device 3 and the traveling position acquired by the traveling position detection device (for example, the planting device position detection device 41 or the like). For example, the winding roller 72 may be configured to be movable in the width direction W. For example, the control device 40 may control the position of the winding roller 72 in the width direction W. Accordingly, the position in which the sheet 71 is installed in the soil may be adjusted. The control device 40 controls the barrier installation device 70 so that the weed barrier is installed while the reforestation traveling device 31 is traveling.

The management device 3 stores the target reforestation line TL which is the locus for planting the plurality of plant bodies PT at predetermined intervals as the reforestation position. For example, the target reforestation line TL is a line narrower than the actual cultivation line TLa having a predetermined width. The control device 40 controls the barrier installation device 70 so that the weed barrier is installed along the target reforestation line TL acquired from the management device 3.

The control device 40 controls the barrier installation device 70 so that the weed barrier is installed in the soil (cultivated soil) cultivated by the cultivating device 12. For example, the procedure (control) in which the barrier installation device 70 installs the weed barrier in the cultivated soil may be the same as the procedure (control) in which the planting device 32 plants the plant body PT in the cultivated soil.

For example, the control device 40 controls the drive roller 73 of the barrier installation device 70 to be rotationally driven so that the sheet 71 is laid on the soil before the reforestation work by the planting device 32. For example, the control device 40 drives the planting device 32 so that the plant body PT is planted in the soil exposed from the through hole 71h of the sheet 71 after the sheet 71 is laid on the soil.

For example, the control device 40 may control the timing when the barrier installation device 70 first lowers the sheet 71 based on the GNSS radio wave received by the planting device position detection antenna 33. For example, the control device 40 may determine a start point for installing the sheet 71 and then rotationally drive the drive roller 73 to feed the sheet 71. Since the plurality of through holes 71h of the sheet 71 are arranged at predetermined intervals, each through hole 71h overlaps the target reforestation position by feeding the sheet 71 after determining the start point.

For example, the control device 40 may reset the start point for installing the sheet 71. For example, the control device 40 may set any one through hole 71h of the plurality of through holes 71h of the sheet 71 as the start point. For example, when the plurality of through holes 71h are arranged at equal intervals in the longitudinal direction of the sheet 71, the sheet 71 may be fed after one predetermined through hole 71h is set as the start point. Accordingly, each through hole 71h of the sheet 71 may overlap each target reforestation position.

### <Operation and effect>

As described above, the reforestation machine 30 of this embodiment includes the vehicle body 30B, the planting device 32 which plants the plant body PT for reforestation at a predetermined position of the soil, the reforestation traveling device 31 which allows the vehicle body 30B and the planting device 32 to travel, a power source which drives the reforestation traveling device 31, and the barrier installation device 70 which installs the weed barrier, restricting the growth of weeds growing around the position in which the plant body PT is planted, around a predetermined position of the soil at the timing before reforestation.

According to this configuration, the barrier installation device 70 can install the weed barrier in the soil at the timing before reforestation. Therefore, the work of installing the weed barrier does not need to be performed manually by the worker. Thus, it is possible to suppress the growth of plants from being hindered without requiring much effort from the worker.

In this embodiment, the weed barrier is biodegradable.

According to this configuration, the weed barrier installed in the soil is environmentally friendly as the weed barrier returns to the soil.

In this embodiment, the barrier installation device 70 is disposed on the front side of the reforestation traveling device 31 in the traveling direction.

According to this configuration, the weed barrier can be installed from the front side of the reforestation traveling device 31 in the traveling direction. Therefore, it is advantageous for performing the reforestation work after the weed barrier is installed.

In this embodiment, the weed barrier consists of the sheet 71.

According to this configuration, it is advantageous for installing the weed barrier over a wide area of soil.

In this embodiment, the sheet 71 has the plurality of through holes 71h that are opened at predetermined intervals for planting the plant bodies.

According to this configuration, the soil around the plant body PT is covered with the sheet 71 by planting the plant body PT in the soil exposed from the through hole 71h. Therefore, it is possible to more effectively suppress the growth of weeds in the soil around the plant body PT.

In this embodiment, the barrier installation device 70 includes the winding roller 72 which winds the sheet 71 and the drive roller 73 which rotates the winding roller 72 to feed the sheet 71 onto the soil.

According to this configuration, the sheet 71 wound around the winding roller 72 can be fed onto the soil by the rotational driving of the drive roller 73. Thus, the sheet 71 can be smoothly installed in the soil.

In this embodiment, the plurality of winding rollers 72 are provided at intervals in the width direction W of the reforestation machine 30.

According to this configuration, since the plurality of winding roller 72 can feed the sheet 71 onto the soil, it is advantageous for installing the sheet 71 along the plurality of target reforestation lines TL.

In this embodiment, the reforestation traveling device 31 includes the pair of crawler belts 31A. The plurality of drive rollers 73 do not overlap the crawler belts 31A when viewed from the traveling direction F of the reforestation traveling device 31.

According to this configuration, it is possible to suppress the sheet 71 fed from the drive roller 73 from interfering with the travel of the crawler belt 31A. Thus, the sheet 71 can be smoothly installed on the soil while the reforestation machine 30 is traveling smoothly.

In this embodiment, the reforestation machine 30 further includes the watering device 80 that sprays water on the area in which the plant body PT is planted.

According to this configuration, watering can help the growth of the plant body PT.

In this embodiment, the reforestation system 1 includes the reforestation machine 30, the management device 3 which manages the target reforestation position, and the control device 40 which controls the reforestation machine based on the target reforestation position acquired from the management device 3.

According to this configuration, the efficiency of the reforestation work can be improved when mechanizing the reforestation work over a large area of land.

In this embodiment, the reforestation system 1 further includes the traveling position detection device (for example, the planting device position detection device 41 or the like) that detects the traveling position of the reforestation machine 30. The control device 40 controls the position in which the weed barrier is installed in the soil based on the target reforestation position acquired from the management device 3 and the traveling position obtained by the traveling position detection device.

According to this configuration, the efficiency of installing the weed barrier can be improved when mechanizing the reforestation work over a large area of land.

In this embodiment, the control device 40 controls the barrier installation device 70 so that the weed barrier is installed while the reforestation traveling device 31 is traveling.

According to this configuration, the weed barrier can be smoothly installed in the soil in accordance with the movement of the reforestation machine 30. Thus, the work of installing the weed barrier can be more efficiently improved when mechanizing the reforestation work over a large area of land.

In this embodiment, the management device 3 stores the target reforestation line TL which is the locus for planting the plurality of plant bodies PT at predetermined intervals as the target reforestation position. The control device 40 controls the barrier installation device 70 so that the weed barrier is installed along the target reforestation line TL acquired from the management device 3.

According to this configuration, the weed barrier can be smoothly installed along the target reforestation line TL acquired from the management device 3. Thus, the work of installing the weed barrier can be more efficiently improved when mechanizing the reforestation work over a large area of land.

In this embodiment, the reforestation system 1 further includes the cultivating device 12 which cultivates soil. The control device 40 controls the barrier installation device 70 so that the weed barrier is installed in the soil cultivated by the cultivating device 12.

According to this configuration, the weed barrier can be smoothly installed in the soil cultivated by the cultivating device. Thus, the work of installing the weed barrier can be more efficiently improved when mechanizing the reforestation work over a large area of land.

In this embodiment, the reforestation machine control method includes the steps of receiving the managed target reforestation position, receiving the traveling position of the reforestation machine 30 that plants the plant body PT for reforestation in soil, and controlling the installation position of the weed barrier for restricting the growth of weeds in soil based on the target reforestation position and the traveling position of the reforestation machine 30.

According to this method, the work of installing the weed barrier does not need to be performed manually by the worker. Thus, it is possible to suppress the growth of plants from being hindered without requiring much effort from the worker.

### <Second embodiment>

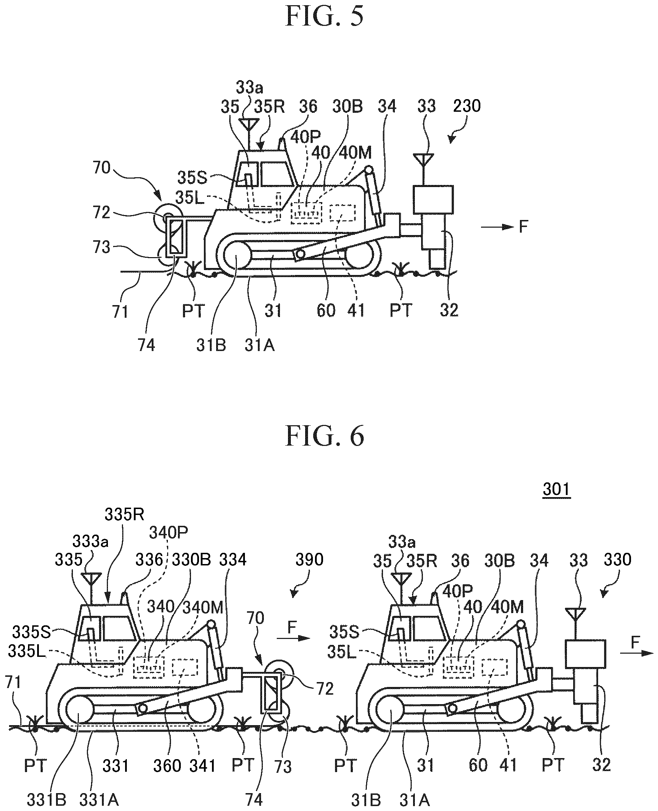

In the first embodiment, an example (see FIG. 3) has been described in which the barrier installation device 70 is disposed on the front side of the reforestation traveling device 31 in the traveling direction. As shown in FIG. 5, a second embodiment is different from the first embodiment in that the barrier installation device 70 is disposed on the rear side of the reforestation traveling device 31 in the traveling direction. In the following description, the same components as those in the first embodiment are denoted by the same reference numerals and the description thereof will be omitted.

FIG. 5 is a schematic view of a reforestation machine 230 according to the second embodiment.

As shown in FIG. 5, the barrier installation device 70 is disposed on the rear side of the reforestation traveling device 31 in the traveling direction F. The winding roller 72 and the drive roller 73 of the barrier installation device 70 are arranged on the rear side of the vehicle body 30B of the reforestation machine 30. The winding roller 72 and the drive roller 73 are arranged side by side in the up to down direction of the reforestation machine 30. The winding roller 72 and the drive roller 73 are attached to the vehicle body 30B of the reforestation machine 30 through the frame 74.

### <Operation and effect>

In the second embodiment, the barrier installation device 70 is disposed on the rear side of the reforestation traveling device 31 in the traveling direction.

According to this configuration, the weed barrier can be installed from the rear side of the reforestation traveling device 31 in the traveling direction. Therefore, it is advantageous for performing the reforestation work before the weed barrier is installed. For example, when the barrier installation device 70 is located at the rear of the vehicle, it is not necessary to divide the winding roller into three as in the first embodiment. This is because the barrier installation device 70 does not overlap the crawler belt at the rear of the crawler belt. That is, the winding roller and the drive roller can each be a single wide roller. Accordingly, since the sheet can be installed in the gap between the target reforestation lines TL shown in FIG. 1, the growth of weeds can be further restricted. In addition, since the winding roller and the drive roller are combined into one, the cost can be reduced.

### <Third embodiment>

In the first embodiment, an example (see FIG. 3) has been described in which the barrier installation device 70 is provided in the reforestation traveling device 31. As shown in FIG. 6, a third embodiment is different from the first embodiment in that the barrier installation device 70 is provided in the traveling device different from the reforestation traveling device 31. In the following description, the same components as those in the first embodiment are denoted by the same reference numerals and the description thereof will be omitted.

FIG. 6 is a schematic view of a reforestation system 301 according to the third embodiment.

As shown in FIG. 6, the reforestation system 301 includes a reforestation machine 330 with the planting device 32 and a barrier installation machine 390 with the barrier installation device 70. The reforestation system 301 further includes a second traveling device 331 which is provided separately from the reforestation traveling device 31. The barrier installation device 70 is provided in the second traveling device 331. The reforestation machine 330 does not include the barrier installation device 70. In the example of FIG. 6, the reforestation machine 330 is disposed on the front side of the barrier installation machine 390, but the present invention is not limited thereto. For example, the reforestation machine 330 may be disposed on the rear side of the barrier installation machine 390. That is, the reforestation machine 330 and the barrier installation machine 390 may be arranged in the reverse order in the front to rear direction.

The barrier installation machine 390 includes a vehicle body 330B, the second traveling device 331, a crawler belt 331A, a sprocket 331B, a vehicle body position detection antenna 333a, a hydraulic cylinder 334, a cab 335 (a driver's seat 335S, an operating device 335L, a roof 335R), a communication antenna 336, a control device 340 (a processing unit 340P, a storage unit 340M), a barrier installation device position detection device 341, and an arm 360. The barrier installation machine 390 does not include the planting device 32. Since the components (excluding the barrier installation device 70) of the barrier installation machine 390 are the same as the components (excluding the planting device 32) of the reforestation machine 330, detailed description will be omitted.

The barrier installation device 70 is disposed on the front side of the second traveling device 331 in the traveling direction F. The winding roller 72 and the drive roller 73 of the barrier installation device 70 are arranged on the front side of the vehicle body 330B of the barrier installation machine 390. The winding roller 72 and the drive roller 73 are arranged side by side in the up to down direction of the barrier installation machine 390. The winding roller 72 and the drive roller 73 are attached to the arm 360 of the barrier installation machine 390 through the frame 74. Furthermore, the barrier installation device 70 may be disposed on the rear side of the second traveling device 331 in the traveling direction F.

### <Operation and effect>

In the third embodiment, the reforestation system 301 further includes the second traveling device 331 which is provided separately from the reforestation traveling device 31. The barrier installation device 70 is provided in the second traveling device 331.

According to this configuration, since the second traveling device 331 can be controlled separately from the reforestation traveling device 31, the efficiency of installing the weed barrier can be improved. For example, the weed barrier can be installed at an appropriate position by controlling the posture of the second traveling device 331 when installing the weed barrier. Therefore, it is possible to suppress the retry of the work of installing the weed barrier.

### <Fourth embodiment>

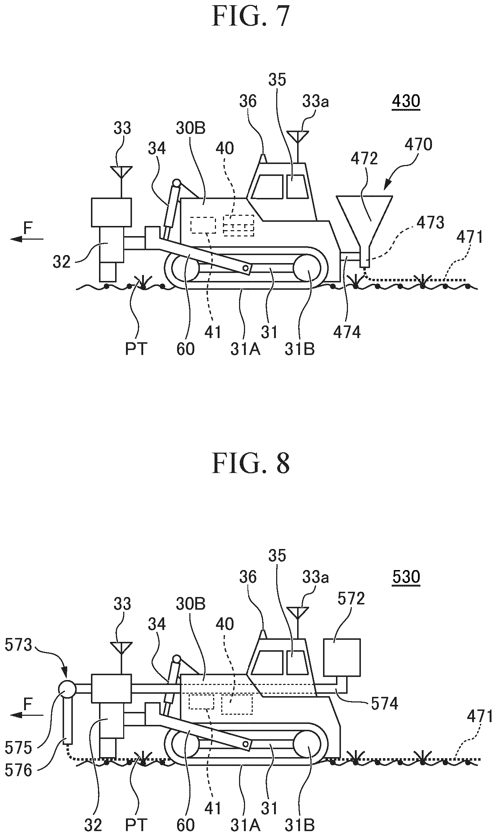

In the first embodiment, an example (see FIG. 2) has been described in which the weed barrier consists of the sheet 71. As shown in FIG. 7, a fourth embodiment is different from the first embodiment in that the weed barrier consists of a plurality of chips 471 (an example of a plurality of objects). In the following description, the same components as those in the first embodiment are denoted by the same reference numerals and the description thereof will be omitted.

FIG. 7 is a schematic view of a reforestation machine 430 according to the fourth embodiment.

As shown in FIG. 7, the reforestation machine 430 includes a barrier installation device 470 which installs a weed barrier for restricting the growth of weeds in soil. For example, the barrier installation device 470 may install the weed barrier at a timing after planting. The weed barrier consists of the plurality of chips 471. The plurality of chips 471 are biodegradable. For example, the chips 471 may be wood chips. For example, the aspect of the chips 471 can be changed according to required specifications. For example, the weed barrier is not limited to the plurality of chips 471 as objects, but may consist of a plurality of particulate matter. For example, the size of each object (each chip, each particulate matter) constituting the weed barrier may be on the order of several micrometers to several centimeters. For example, the aspect of each object constituting the weed barrier can be changed according to required specifications. Particulate matter is an example of objects.

The barrier installation device 470 is disposed on the rear side of the reforestation traveling device 31 in the traveling direction F. The barrier installation device 470 is fixed to the vehicle body 30B through a connecting member 474. The barrier installation device 470 includes a container 472 which stores the plurality of chips 471 and a spraying mechanism 473 which sprays the plurality of chips 471 to the soil stored in the container 472. The spraying mechanism 473 sprays the plurality of chips 471 to the soil on the rear side of the reforestation traveling device 31 in the traveling direction.

For example, the container 472 is a hopper having an inverted cone shape (funnel shape). For example, the container 472 is not limited to the hopper, but can be changed according to required specifications. The bottom portion of the container 472 has an outlet for discharging the plurality of chips 471. The spraying mechanism 473 may include a sparging valve that opens and closes the outlet at the bottom portion of the container 472.

For example, the control device 40 may control the spraying mechanism 473 to spray the plurality of chips 471 to the periphery of the planted seedlings. For example, the control device 40 may supply the plurality of chips 471 in the container 472 to the soil by opening the spray valve when the container 472 overlaps the area in which seedlings are planted. For example, the control device 40 may adjust the amount of the plurality of chips 471 supplied to the soil by controlling the opening time of the spray valve.

### <Operation and effect>

In the fourth embodiment, the weed barrier consists of the plurality of chips 471.

According to this configuration, it is advantageous for locally installing the weed barrier in the soil. In addition, since there is no need to align the holes with the reforestation positions compared to when the weed barrier consists of a sheet with holes, precise control is not required. Further, since there is no need to divide the line into three like sheets, and the chips can be spread over the entire surface, the growth of weeds can be more effectively restricted.

In the fourth embodiment, the barrier installation device 470 includes the container 472 which stores the plurality of chips 471 and the spraying mechanism 473 which sprays the plurality of chips 471 stored in the container 472 to the soil.

According to this configuration, the plurality of chips 471 stored in the container 472 can be sprayed to the soil by the driving of the spraying mechanism 473. Thus, the plurality of chips 471 can be smoothly installed in the soil.

### <Fifth embodiment>

In the fourth embodiment, an example (see FIG. 7) has been described in which the spraying mechanism 473 sprays the plurality of chips 471 to the soil on the rear side of the reforestation traveling device 31 in the traveling direction. As shown in FIG. 8, a fifth embodiment is different from the fourth embodiment in that a spraying mechanism 573 sprays the plurality of chips 471 to the soil on the front side of the reforestation traveling device 31 in the traveling direction. In the following description, the same components as those in the first and fourth embodiments are denoted by the same reference numerals and the description thereof will be omitted.

FIG. 8 is a schematic view of a reforestation machine 530 according to the fifth embodiment.

As shown in FIG. 8, the reforestation machine 530 includes a barrier installation device 570 which installs a weed barrier for restricting the growth of weeds in the soil. The barrier installation device 570 includes a container 572 which stores the plurality of chips 471 and the spraying mechanism 573 which sprays the plurality of chips 471 to the soil stored in the container 572.

The container 572 is disposed on the rear side of the reforestation traveling device 31 in the traveling direction F. The bottom portion of the container 572 has an outlet for discharging the plurality of chips 471. The spraying mechanism 573 includes a first pipe 574 which extends from the outlet of the bottom portion of the container 572 toward the front side of the reforestation traveling device 31 in the traveling direction F, a suction mechanism 575 which is provided at the front end of the first pipe 574 (the end on the opposite side to the container 572), and a second pipe 576 which extends downward from the suction mechanism 575.

For example, the control device 40 may control the spraying mechanism 573 so that the plurality of chips 471 are sprayed around the planted seedling. For example, the control device 40 may supply the plurality of chips 471 in the container 572 to the soil by driving the suction mechanism 575 at the timing when the lower end of the second pipe 576 overlaps the area in which the seedling is planted. For example, the control device 40 may adjust the amount of the plurality of chips 471 supplied to the soil by controlling the driving output of the suction mechanism 575.

### <Sixth embodiment>

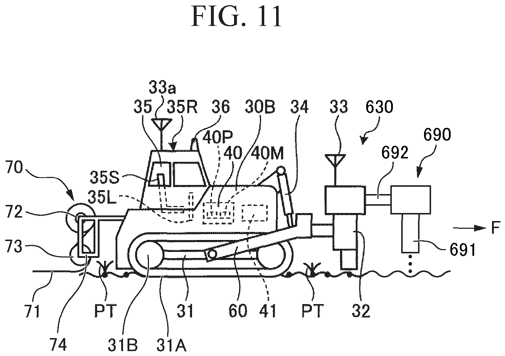

In the second embodiment, an example (see FIG. 5) has been described in which the barrier installation device 70 is disposed on the rear side of the reforestation traveling device 31 in the traveling direction. As shown in FIG. 11, the sixth embodiment is different from the second embodiment in that an inactivation treatment for inactivating objects (for example, pests and weeds) that hinder the growth of the plant body PT is performed around a predetermined position in the soil. In the following description, the same components as those in the first and second embodiments are denoted by the same reference numerals and the description thereof will be omitted.

FIG. 11 is a schematic view of a reforestation machine 630 according to the sixth embodiment.

As shown in FIG. 11, the reforestation machine 630 includes an inactivation treatment device 690 which performs an inactivation treatment, inactivating an object that hinders the growth of the plant body PT, around a predetermined position of the soil. The inactivation treatment device 690 performs an inactivation treatment on the soil at the timing before reforestation. The inactivation treatment device 690 is disposed on the front side of the reforestation traveling device 31 in the traveling direction F. The inactivation treatment device 690 is disposed on the front side of the planting device 32. The inactivation treatment device 690 is attached to the planting device 32 or the vehicle body 30B of the reforestation machine 30 through the frame 692.

For example, the inactivation treatment device 690 may include an electromagnetic wave irradiation device 691 that irradiates the soil with electromagnetic waves. For example, the electromagnetic wave irradiation device 691 may include a battery, a capacitor, a magnetron, and the like. For example, the inactivation treatment device 690 is not limited to the one having the electromagnetic wave irradiation device 691. For example, the inactivation treatment device 690 may include a hot water injection device that injects hot water (for example, water at a temperature of 95°C or higher and 100°C or lower) onto the soil. For example, the hot water injection device may include a tank for storing water, a heater for heating the water, and an injection pipe for injecting the hot water. For example, the inactivation treatment device 690 may include an electric shock device that applies an electric shock to the soil. For example, the electric shock device may include a plurality of electric wires having discharge terminals (for example, a positive terminal and a negative terminal) and a battery. For example, the configuration aspect of the inactivation treatment device 690 may be changed according to design specifications.

For example, the control device 40 may adjust the degree of the inactivation treatment performed on the soil by controlling the driving output of the inactivation treatment device 690. For example, the control device 40 may adjust the output of the electromagnetic waves irradiated to the soil by controlling the electromagnetic wave irradiation device 691. For example, the control device 40 may control the hot water injection device to adjust the temperature and amount of hot water injected into the soil. For example, the control device 40 may adjust the strength (voltage) of the electric shock applied to the soil by controlling the electric shock device.

For example, the control device 40 may control the inactivation treatment device 690 so that an inactivation treatment is performed around a position in which the plant body PT is planted. For example, the control device 40 may control the inactivation treatment device 690 to the extent that objects (for example, pests and weeds) that hinder the growth of the plant body PT around the position in which the plant body PT is planted are changed to an inactive state (for example, a state that prevents or delays as much as possible the growth of pests or weeds).

### <Operation and effect>

In the sixth embodiment, the reforestation machine 630 includes the inactivation treatment device 690 which performs an inactivation treatment, inactivating an object that hinders the growth of the plant body PT, on the soil.

According to this configuration, the soil can be subjected to the inactivation treatment by the inactivation treatment device 690. Therefore, the work of performing the inactivation treatment on the soil does not need to be performed manually by the worker.
Thus, it is possible to suppress the growth of plants from being hindered without requiring much effort from the worker.

In the sixth embodiment, the inactivation treatment device 690 performs an inactivation treatment on the soil at the timing before reforestation.

According to this configuration, the effect of the inactivation treatment on the growth of the plant can be suppressed compared to the case of performing the inactivation treatment on the soil at the timing after reforestation.

### <Other embodiments>

In the above-described embodiment, an example has been described in which the weed barrier is biodegradable, but the present invention is not limited thereto. For example, the weed barrier may not be biodegradable. For example, the weed barrier may consist of non-biodegradable sheets. For example, the weed barrier may consist of the plurality of non-biodegradable chips. For example, the aspect of the weed barrier can be changed according to the required specifications.

In the above-described embodiment (for example, the first embodiment), the sheet has a plurality of through holes opened at predetermined intervals for planting the plant bodies, but the present invention is not limited thereto. For example, the sheet may not have a plurality of through holes. For example, the sheet may be formed in a strip shape without the through hole. For example, the sheet without the through hole may be installed on the lateral region of the plant body. More specifically, the left and right areas of the line on which the plant bodies are planted may be widely covered with a sheet. Accordingly, it is not necessary to align the holes of the sheet with the reforestation positions. For example, the aspect of the sheet can be changed according to the required specifications.

For example, a sheet may be formed of a material that has no hole and is easily tom, and the sheet may be installed first, followed by planting. For example, the sheet may be formed of a material through which the telescopic portion of the planting device can penetrate by the telescopic operation. Accordingly, since the telescopic portion of the planting device penetrates the sheet for planting when entering the ground, positioning is not required.

For example, in an aspect in which the sheet is installed first and then reforestation is performed, a sensor that detects the position of the hole of the sheet may be provided. For example, the reforestation position may be controlled based on the hole position detected by the sensor. According to this configuration, since the problem is handled by sensing, precise positioning is not required.

In the above-described embodiment (for example, the first embodiment), an example has been described in which the plurality of drive rollers are provided at intervals in the width direction of the reforestation machine, but the present invention is not limited thereto. For example, the plurality of drive rollers may not be provided at intervals in the width direction of the reforestation machine. For example, only one drive roller may be provided in the width direction of the reforestation machine. For example, one drive roller may extend along the soil when viewed from the traveling direction of the traveling device. For example, the drive roller may protrude toward the outside of the pair of crawler belts when viewed from the traveling direction of the traveling device. For example, the drive roller may feed one strip-shaped sheet over a wide area of soil. For example, the installation aspect of the drive roller can be changed according to the required specifications. Further, as long as the sheet is installed by being carried by friction between the sheet and the ground, any configuration may be used to support the sheet instead of using drive rollers.

In the above-described embodiment (for example, the first embodiment), an example has been described in which the water in the water tank is used for irrigation when planting seedlings, but the present invention is not limited thereto. For example, the water in the water tank may be water for cleaning the planting device. For example, the aspect of the water in the water tank can be changed according to required specifications.

In the above-described embodiment (for example, the sixth embodiment), an example has been described in which the reforestation machine further includes the inactivation treatment device which performs an inactivation treatment, inactivating an object that hinders the growth of the plant body, on the soil, but the present invention is not limited thereto. For example, the reforestation machine may include the inactivation treatment device instead of the barrier installation device. For example, the configuration aspect of the reforestation machine can be changed according to the design specifications.

In the above-described embodiment (for example, the sixth embodiment), an example has been described in which the reforestation machine includes the barrier installation device and the inactivation treatment device, but the present invention is not limited thereto. For example, the reforestation system may further include an inactivation treatment device which performs an inactivation treatment, inactivating an object that hinders the growth of the plant body, on the soil. For example, the reforestation system may include a reforestation machine which has a planting device, a barrier installation machine which has a barrier installation device, and an inactivation treatment machine which has an inactivation treatment device. For example, the reforestation system may further include a third traveling device separately from the second traveling device provided separately from the reforestation traveling device (the traveling device provided with the barrier installation device). For example, the inactivation treatment device may be provided in the third traveling device. For example, the configuration aspect of the reforestation system can be changed according to the design specifications.

In the above-described embodiment, the coordinate system of the actual cultivation position, the actual cultivation line, and the target reforestation line is the global coordinate system, but the present invention is not limited thereto. For example, the coordinate system of the actual cultivation position, the actual cultivation line, and the target reforestation line may be a coordinate system set uniquely for the reforestation area. For example, the coordinate system of the actual cultivation position, the actual cultivation line, and the target reforestation line can be changed according to the required specifications.

### (Appendix 1)

A reforestation machine including:
a main body;
a planting device which plants a plant body for reforestation at a predetermined position of soil;
a traveling device which allows the main body and the planting device to travel;
a power source which drives the traveling device; and
a barrier installation device which installs a weed barrier, restricting the growth of weeds growing around a position in which the plant body is planted, around the predetermined position of the soil.

### (Appendix 2)

The reforestation machine according to Appendix 1,
wherein the barrier installation device installs the weed barrier at the timing before reforestation.

### (Appendix 3)

The reforestation machine according to Appendix 1,
wherein the barrier installation device installs the weed barrier at the timing after reforestation.

### (Appendix 4)

The reforestation machine according to any one of Appendices 1 to 3,
wherein the weed barrier is biodegradable.

### (Appendix 5)

The reforestation machine according to any one of Appendices 1 to 4,
wherein the barrier installation device is disposed on the front side of the traveling device in the traveling direction.

### (Appendix 6)

The reforestation machine according to any one of Appendices 1 to 5,
wherein the weed barrier consists of a sheet.

### (Appendix 7)

The reforestation machine according to any one of Appendices 1 to 5,
wherein the weed barrier consists of a plurality of objects.

### (Appendix 8)

The reforestation machine according to Appendix 6,
wherein the sheet has a plurality of through holes opened at predetermined intervals to plant the plant body.

### (Appendix 9)

The reforestation machine according to Appendix 6 or 8,
wherein the barrier installation device includes a winding roller which winds the sheet and a drive roller which rotates the winding roller to feed the sheet to the soil.

### (Appendix 10)

The reforestation machine according to Appendix 9,
wherein a plurality of the winding rollers are provided at intervals in a width direction of the reforestation machine.

### (Appendix 11)

The reforestation machine according to Appendix 10,
wherein the traveling device includes a pair of crawler belts, and
wherein the drive roller does not overlap the crawler belt when viewed from a traveling direction of the traveling device.

### (Appendix 12)

The reforestation machine according to Appendix 7,
wherein the barrier installation device includes a container which stores the plurality of objects and a spraying mechanism which sprays the plurality of objects stored in the container to the soil.

### (Appendix 13)

The reforestation machine according to any one of Appendices 1 to 12, further including:
a watering device which sprays water to an area in which the plant body is planted.

### (Appendix 14)

A reforestation system including:
a reforestation machine including a main body, a planting device for planting a plant body for reforestation at a predetermined position of soil, a traveling device for allowing the main body and the planting device to travel, a power source for driving the traveling device, and a barrier installation device for installing a weed barrier, restricting the growth of weeds growing around a position in which the plant body is planted, around the predetermined position of the soil;
a management device which manages a target reforestation position; and
a control device which controls the reforestation machine based on the target reforestation position acquired from the management device.

### (Appendix 15)

The reforestation system according to Appendix 14, further including:
a traveling position detection device which detects a traveling position of the reforestation machine,
wherein the control device controls a position in which the weed barrier is installed in the soil based on the target reforestation position acquired from the management device and the traveling position obtained by the traveling position detection device.

### (Appendix 16)

The reforestation system according to Appendix 14 or 15,
wherein the control device controls the barrier installation device so that the weed barrier is installed while the traveling device is traveling.

### (Appendix 17)

The reforestation system according to any one of Appendices 14 to 16,
wherein the management device stores a target reforestation line which is a locus for planting a plurality of the plant bodies at predetermined intervals as the target reforestation position, and
wherein the control device controls the barrier installation device so that the weed barrier is installed along the target reforestation line acquired from the management device.

### (Appendix 18)

The reforestation system according to any one of Appendices 14 to 17, further including:
a cultivating device which cultivates the soil,
wherein the control device controls the barrier installation device so that the weed barrier is installed in the soil cultivated by the cultivating device.

### (Appendix 19)

The reforestation system according to any one of Appendices 14 to 18, further including:
a second traveling device which is provided separately from the traveling device for allowing the main body and the planting device to travel,
wherein the barrier installation device is provided in the second traveling device.

### (Appendix 20)

The reforestation machine according to any one of Appendices 1 to 13, further including:
an inactivation treatment device which performs an inactivation treatment for inactivating an object hindering the growth of the plant body on the soil.

### (Appendix 21)

The reforestation machine according to Appendix 20,
wherein the inactivation treatment device performs the inactivation treatment at the timing before reforestation.

### (Appendix 22)

The reforestation system according to any one of Appendices 14 to 19, further including:
an inactivation treatment device which performs an inactivation treatment for inactivating an object hindering the growth of the plant body on the soil.

### (Appendix 23)

A reforestation machine including:
a main body;
a planting device which plants a plant body for reforestation at a predetermined position of soil;
a traveling device which allows the main body and the planting device to travel;
a power source which drives the traveling device; and
an inactivation treatment device which performs an inactivation treatment for inactivating an object hindering the growth of the plant body on the soil.

Although the embodiments of the present invention have been described above, the present invention is not limited to thereto, and additions, omissions, substitutions, and other modifications of the configuration can be made within the scope that does not deviate from the spirit of the present invention, and the above-described embodiments can be combined as appropriate.

### BRIEF DESCRIPTION OF THE REFERENCE SYMBOLS

1 Reforestation system
3 Management device
12 Cultivating device
30 Reforestation machine
30B Vehicle body (main body)
31 Reforestation traveling device (traveling device)
31A Crawler belt
32 Planting device
33 Planting device position detection antenna (traveling position detection device)
33a Vehicle body position detection antenna (traveling position detection device)
40 Control device
41 Planting device position detection device (traveling position detection device)
41a Vehicle body position detection device (traveling position detection device)
70 Barrier installation device
71 Sheet (weed barrier)
71h Through hole
72 Winding roller
73 Drive roller
80 Watering device
230 Reforestation machine
301 Reforestation system
330 Reforestation machine
331 Second traveling device
430 Reforestation machine
470 Barrier installation device
471 Chip (object, weed barrier)
472 Container
473 Spraying mechanism
530 Reforestation machine
570 Barrier installation device
572 Container
573 Spraying mechanism
630 Reforestation machine
690 Inactivation treatment device
PT Plant body
TL Target reforestation line
TLa Actual cultivation line

## Claims

1. A reforestation machine comprising:
a main body;
a planting device which plants a plant body for reforestation at a predetermined position of soil;
a traveling device which allows the main body and the planting device to travel;
a power source which drives the traveling device; and
a barrier installation device which installs a weed barrier, restricting the growth of weeds growing around a position in which the plant body is planted, around the predetermined position of the soil.

2. The reforestation machine according to claim 1,
wherein the barrier installation device installs the weed barrier at the timing before reforestation.

3. The reforestation machine according to claim 1 or 2,
wherein the weed barrier consists of a sheet.

4. The reforestation machine according to claim 1 or 2,
wherein the weed barrier consists of a plurality of objects.

5. The reforestation machine according to claim 3,
wherein the sheet has a plurality of through holes opened at predetermined intervals to plant the plant body.

6. The reforestation machine according to claim 3,
wherein the barrier installation device includes a winding roller which winds the sheet and a drive roller which rotates the winding roller to feed the sheet to the soil.

7. The reforestation machine according to claim 6,
wherein a plurality of the winding rollers are provided at intervals in a width direction of the reforestation machine.

8. The reforestation machine according to claim 7,
wherein the traveling device includes a pair of crawler belts, and
wherein the drive roller does not overlap the crawler belt when viewed from a traveling direction of the traveling device.

9. The reforestation machine according to claim 4,
wherein the barrier installation device includes a container which stores the plurality of objects and a spraying mechanism which sprays the plurality of objects stored in the container to the soil.

10. The reforestation machine according to claim 1 or 2, further comprising:
a watering device which sprays water to an area in which the plant body is planted.

11. A reforestation system comprising:
a reforestation machine including a main body, a planting device for planting a plant body for reforestation at a predetermined position of soil, a traveling device for allowing the main body and the planting device to travel, a power source for driving the traveling device, and a barrier installation device for installing a weed barrier, restricting the growth of weeds growing around a position in which the plant body is planted, around the predetermined position of the soil;
a management device which manages a target reforestation position; and
a control device which controls the reforestation machine based on the target reforestation position acquired from the management device.

12. The reforestation system according to claim 11, further comprising:
a traveling position detection device which detects a traveling position of the reforestation machine,
wherein the control device controls a position in which the weed barrier is installed in the soil based on the target reforestation position acquired from the management device and the traveling position obtained by the traveling position detection device.

13. The reforestation system according to claim 11 or 12,
wherein the control device controls the barrier installation device so that the weed barrier is installed while the traveling device is traveling.

14. The reforestation system according to claim 11 or 12,
wherein the management device stores a target reforestation line which is a locus for planting a plurality of the plant bodies at predetermined intervals as the target reforestation position, and
wherein the control device controls the barrier installation device so that the weed barrier is installed along the target reforestation line acquired from the management device.

15. The reforestation system according to claim 11 or 12, further comprising:
a cultivating device which cultivates the soil,
wherein the control device controls the barrier installation device so that the weed barrier is installed in the soil cultivated by the cultivating device.

16. The reforestation system according to claim 11 or 12, further comprising:
a second traveling device which is provided separately from the traveling device for allowing the main body and the planting device to travel,
wherein the barrier installation device is provided in the second traveling device.

17. A reforestation machine control method comprising:
receiving a managed target reforestation position;
receiving a traveling position of a reforestation machine for planting a plant body for reforestation in soil; and
controlling a position in which a weed barrier for restricting the growth of weeds is installed in the soil based on the target reforestation position and the traveling position of the reforestation machine.

18. The reforestation machine according to claim 1, further comprising:
an inactivation treatment device which performs an inactivation treatment for inactivating an object hindering the growth of the plant body on the soil.

19. The reforestation machine according to claim 18,
wherein the inactivation treatment device performs the inactivation treatment at the timing before reforestation.

20. A reforestation machine comprising:
a main body;
a planting device which plants a plant body for reforestation at a predetermined position of soil;
a traveling device which allows the main body and the planting device to travel;
a power source which drives the traveling device; and
an inactivation treatment device which performs an inactivation treatment for inactivating an object hindering the growth of the plant body on the soil.
